# EUROPÄISCHE PATENTSCHRIFT

(11) **EP 2 483 579 B1**
(45) Veröffentlichungstag und Bekanntmachung des Hinweises auf die Patenterteilung: **28.05.2014**
(21) Anmeldenummer: 10751612.2
(22) Anmeldetag: 30.08.2010
(51) Int. Cl.: F16J 9/06, F16J 9/16, F16J 9/22

(54) **ÖLABSTREIFRING**
PISTON OIL RING
SEGMENT RACLEUR DE PISTON

(30) Priorität: 29.09.2009 DE 102009043440
(43) Veröffentlichungstag der Anmeldung: 08.08.2012
(73) Patentinhaber: Federal-Mogul Burscheid GmbH, 51399 Burscheid (DE)
(72) Erfinder: BRILLERT, Hans-Rainer, 51399 Burscheid (DE); PRÖPPER, Jörn, 51375 Leverkusen (DE); MITTLER, Richard, 42799 Leichlingen (DE)
(74) Vertreter: Becker Kurig Straus
(86) Internationale Anmeldenummer: PCT/EP2010/062630
(87) Internationale Veröffentlichungsnummer: WO 2011/039015

(56) Entgegenhaltungen:
- DE-A1- 3 836 577
- FR-A- 719 659
- FR-A1- 2 517 407
- JP-A- 4 300 467
- US-A- 2 229 578

## Beschreibung

Die Erfindung betrifft einen Ölabstreifring für einen Kolben einer Brennkraftmaschine.

Allgemein bekannt ist, dass für Ottomotoren zur Kontrolle des Ölhaushalts dreiteilige Ölabstreifringe, bestehend aus einer Feder und zwei Stahlbandringen, eingesetzt werden. Die Feder übernimmt in diesem System zwei Aufgaben. Zum einen dient die Feder als Abstandshalter für die beiden Stahlbandringe, die auch als Rails oder Lamellen bezeichnet werden und zweitens bringt die Feder in dem System eine Radialkraft auf, die die Stahlbandringe mit dem Außendurchmesser (Lauffläche) an die Zylinderwand andrückt. Aus vielerlei technischen Gründen besteht zunehmend die Forderung der Motorenentwickler, die axiale Höhe sämtlicher Kolbenringe zu verringern. Bei einteiligen Ringen ist diese Aufgabe ungleich leichter zu lösen als bei mehrteiligen.

Der DE 38 36 577 A1 ist ein Ölabstreifkolbenring zu entnehmen, bestehend aus mindestens zwei in einer Kolbennut axial übereinander angeordneten Lamellenringen, welche, über den Umfang verteilt, eine Vielzahl von axial gerichteten Vorsprüngen aufweisen, auf denen sich die Lamellenringe, einen Freiraum zur Ölrückführung bildend, axial abstützen.

Der US 3,917,133 ist ein Kolbenringsystem zu entnehmen, wobei der Kolben zur Aufnahme einzelner oder mehrerer Kolbenringe mit Nuten unterschiedlicher axialer Höhe versehen ist. Zum Einsatz gelangen auch zwei relativ dünne selbstspannende Lamellen, deren Stöße versetzt zueinander angeordnet sind. Dieses System soll dem verstärkten Gasdurchtritt in axialer Richtung entgegenwirken.

Durch die JP 10169506 A ist ein Kolben für eine Brennkraftmaschine bekannt geworden, der ähnlich aufgebaut ist wie vorab beschrieben. In der dritten Nut kommen hier zwei relativ dünne übereinander angeordnete Lamellen zum Einsatz, die als Ölabstreifring definiert werden können. Diese Lamellen sind selbstspannend ausgebildet.

Bis zu einer gewissen axialen Höhe ist es technisch möglich, die Bauhöhe eines dreiteiligen Ölabstreifrings nur durch Maßnahmen an der Feder zu reduzieren. Reduzierungen über diesen Grenzwert von etwa 2,0 mm hinaus erfordern darüber hinaus die Höhe der Stahlbandringe zu verringern. Dieser Höhenreduzierung der Stahlbandringe sind jedoch ebenfalls technische Grenzen gesetzt, da der Fertigungsaufwand von extrem dünnen Stahlbandringen unverhältnismäßig ansteigt.

Der Erfindung liegt die Aufgabe zugrunde, einen dreiteiligen Ölabstreifring für einen Kolben einer Brennkraftmaschine bereitzustellen, wobei der Kolben eine zugehörige Nut mit einer axialen Höhe von etwa 1 mm aufweist.

Diese Aufgabe wird gelöst durch einen Ölabstreifring für einen Kolben einer Brennkraftmaschine, wobei der Kolben zur Aufnahme des Ölabstreifrings mit einer umlaufenden Nut versehen ist, deren axiale Höhe etwa 1 mm beträgt, bestehend aus zwei Lamellen mit einer Gesamthöhe < 1 mm, die mit definiertem axialen Spiel innerhalb der Nut übereinander angeordnet sind und durch ein nutseitig vorgesehenes Federelement mit einer maximalen Höhe, respektive einem maximalen Durchmesser, von 0,9 mm, mit vorgebbarer radialer Spannkraft an eine den Kolben umgebende Gegenlauffläche andrückbar sind.

Vorteilhafte Weiterbildungen des Erfindungsgegenstandes sind den Unteransprüchen zu entnehmen.

Infolge der erfindungsgemäßen Dimensionierung einerseits der Lamellen und andererseits des Federelements ist es nun möglich, für extrem niedrig ausgeführte Kolbennuten ein entsprechend dimensioniertes dreiteiliges Ölabstreifringsystem bereitzustellen, das dem Vorgaben der Motorenentwickler entspricht. Das Federelement dient nicht mehr als Abstandshalter für die Lamellen, sondern nimmt nur noch seine eigentliche Aufgabe, nämlich die Erzeugung einer radialen Spannkraft, wahr.

Von besonderem Vorteil ist, dass eine jede Lamelle eine maximale Höhe von 0,46 mm aufweist. Die Lamellen sind zumindest laufflächenseitig zumindest partiell gerundet ausgebildet.

In einer ersten Ausgestaltungsform, die nicht erfindungsgemäß ist, sind die einander zugewandten Flankenbereiche der Lamellen plan ausgebildet. Infolge der gewählten Dimensionierung der Lamellen sind selbige mit definiertem axialen Spiel innerhalb der den Ölabstreifring aufnehmenden Kolbennut positioniert, so dass abgestreiftes Öl problemlos in den die Feder aufnehmenden hinteren Bereich der Nut abgeführt werden kann.

Erfindungsgemäß ist mindestens eine der einander zugewandten Flankenbereiche der Lamellen mit einem Profil versehen. Selbiges kann in Form einer umlaufenden Ausnehmung ausgebildet werden.

Erfindungsgemäß vorgesehen ist, einen der einander zugewandten Flankenbereiche mindestens einer der Lamellen ballig auszubilden.

Von besonderem Vorteil ist, wenn die einander zugewandten Flankenbereiche mit gegensinnig ausgebildeten einander zugewandten Profilen ausgebildet werden.

Das Federelement wird hinter den beiden Lamellen angeordnet und hat lediglich die Aufgabe, in dem System eine radiale Kraft zwischen 3 und 7 N auf die Stahlbandringe aufzubringen.

Infolge der beispielsweise leicht ballig ausgeführten Flankenbereiche der Lamelle(n) kann nun ein definierter Abstand zwischen den Lamellen erzeugt werden, wobei auch hier die Feder hinter den Lamellen positioniert ist und ausschließlich der radialen Kraftaufbringung dient.

Je nach Einsatzbereich kann es sinnvoll sein, die der Gegenlauffläche zugewandte Lauffläche der Lamellen mit einer verschleißfesten Beschichtung zu versehen, die bedarfsweise durch eine Chromschicht oder eine andere geeignete Beschichtung, wie z.B. PVD oder DLC, gebildet sein kann.

Alternativ kann zumindest die Lauffläche der Lamellen nitriert sein. Ebenfalls denkbar ist, die Lamellen vollständig zu nitrieren. Dann würde es Sinn machen, auch das Federelement zu nitrieren. Der Laufflächenbereich der Lamelle kann zusätzlich noch mit einer PVD- oder DLC-Beschichtung versehen sein.

Der Erfindungsgegenstand ist anhand eines Ausführungsbeispiels dargestellt und wird wie folgt beschrieben. Es zeigen:
- Figur 1: Prinzipskizze eines angedeuteten Kolbens zur Aufnahme des erfindungsgemäßen Ölabstreifrings;
- Figuren 2 bis 3: Verschiedene Ausgestaltungsformen des Ölabstreifrings;
- Figur 4: Eine Ausgestaltungsform des erfindungsgemäßen Ölabstreifrings;
- Figur 5: Einzeldarstellung des Ölabstreifrings gemäß Figur 2 in verschiedenen Ansichten.

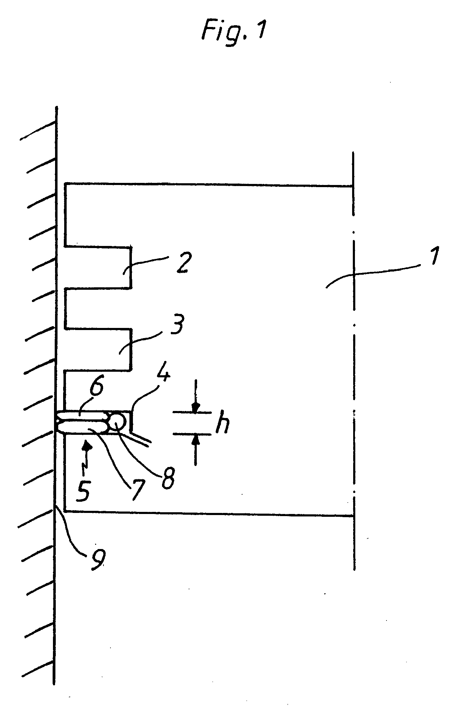

Figur 1 zeigt einen Kolben 1 einer nicht weiter dargestellten Brennkraftmaschine, der mit mehreren Nuten 2,3,4 versehen ist. Die Nuten 2,3 sollen zur Aufnahme nicht weiter dargestellter Kompressionskolbenringe dienen, während die Nut 4 zur Aufnahme des erfindungsgemäßen Ölabstreifrings 5 dient. Die Nut 4 soll eine axiale Höhe h von 1,0 mm aufweisen. Der Ölabstreifring 5 besteht aus zwei spannungslos ausgebildeten Lamellen 6,7 definierter axialer Höhe und radialer Breite, deren Einzelhöhe so gewählt ist, dass sie mit vorgebbarem axialen Spiel innerhalb der Nut 4 eingebaut werden können. Radial hinter den Lamellen 6,7 ist ein Federelement 8 angeordnet, das einzig und allein die Aufgabe hat, die spannungslosen Lamellen 6,7 mit vorgebbarer radialer Spannkraft an eine den Kolben 1 umgebende Gegenlauffläche 9, hier eine Zylinderwand, anzudrücken.

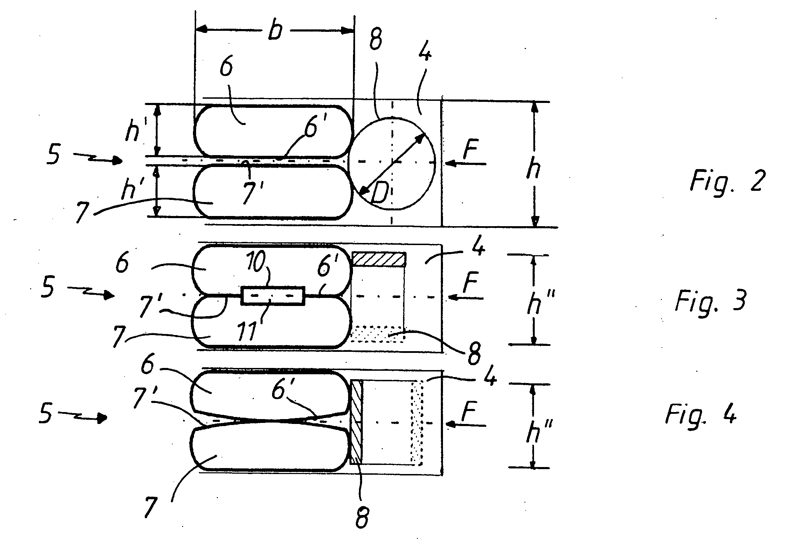

Die Figuren 2 bis 3 zeigen unterschiedliche Ausgestaltungsformen des Ölabstreifrings 5. In allen drei Beispielen weist der jeweilige Ölabstreifring 5 zwei als Stahlbandringe ausgebildete Lamellen 6,7 auf. Die aufnehmende Nut 4 ist in vergrößerter Form lediglich angedeutet. Wie bereits zu Figur 1 angesprochen, soll die Nut 4 eine Höhe h von 1 mm aufweisen. Die zum Einsatz gelangenden Lamellen 6,7 haben in diesem Beispiel jeweils eine Höhe h' von 0,45 mm, so dass sich ein axiales Spiel von 0,1 mm gegenüber der Höhe h der Nut 4 ergibt. Die spannungslos ausgebildeten Lamellen 6,7 werden durch ein Federelement 8 unterschiedlicher Ausgestaltungsform mit vorgebbarer radialer Spannkraft F an die hier nicht dargestellte Gegenlauffläche (Fig. 1) angepresst. Das ringförmig ausgebildete Federelement 8 gemäß Fig. 1 hat einen Durchmesser D von 0,9 mm und ist radial hinter den Lamellen 6,7 innerhalb der Nut 4 positioniert.

In Figur 2 ist dargestellt, dass die einander zugewandten Flankenbereiche 6',7' der Lamellen 6,7 plan ausgebildet sind.

Gemäß Figur 3 sind die einander zugewandten Flankenbereiche 6',7' jeweils mit einer umlaufend ausgebildeten Ausnehmung 10,11 versehen, die in diesem Beispiel gegensinnig verlaufend ausgebildet sind. Die Ausnehmung 10,11 reduziert die Äuflagefläche der Lamellen 6,7 zueinander und bewirkt eine Verringerung der Kohäsionsneigung. Dadurch sind die Lamellen 6,7 innerhalb der Nut 4 relativ zueinander leichter beweglich. Zum Einsatz gelangt hier ein Federelement 8, das eine Höhe h" von 0,85 mm aufweist.

Bei den in Figur 4 dargestellten Lamellen 6,7 sind die einander zugewandten Flankenbereiche 6',7' ballig ausgebildet. Das hier dargestellte Federelement 8 soll eine Höhe h" von 0,87 mm aufweisen.

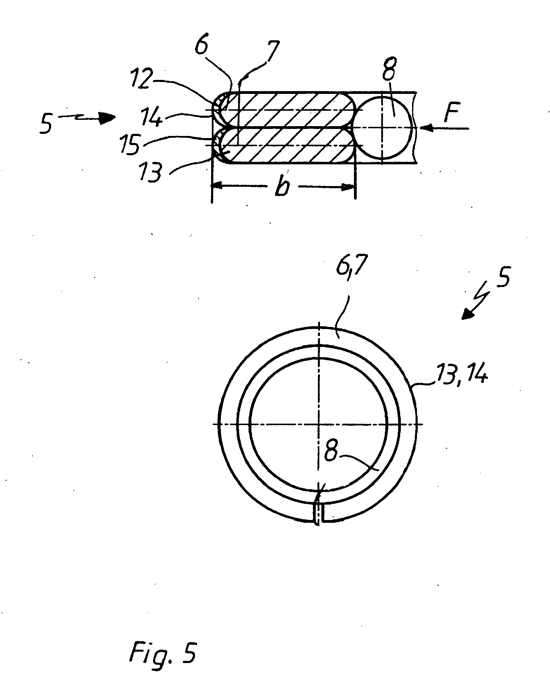

Figur 5 zeigt als Einzeldarstellung den in Figur 2 dargestellten Ölabstreifring 5 in verschiedenen Ansichten. Erkennbar sind die Lamellen 6,7 sowie das Federelement 8. Die Lamellen 6,7 sollen in diesem Beispiel eine Gesamtwandstärke b von 2,5 mm aufweisen. Die in diesem Beispiel gerundet ausgebildeten Laufflächen 12,13 der Lamellen 6,7 sind in diesem Beispiel mit einer verschleißfesten Beschichtung (14,15), hier eine Chromschicht, versehen. Die radiale Spannkraft F des Federelementes 8 soll in diesem Beispiel 5 N betragen.

## Patentansprüche

1. Ölabstreifring für einen Kolben (1) einer Brennkraftmaschine, wobei der Kolben (1) zur Aufnahme des Ölabstreifrings (5) mit einer umlaufenden Nut (4) versehen ist, deren axiale Höhe (h) etwa 1 mm beträgt bestehend aus zwei Lamellen (6, 7) mit einer Gesamthöhe < 1 mm, die im eingebauten Zustand mit definiertem axialen Spiel innerhalb der Nut (4) übereinander angeordnet sind und durch ein nutseitig vorgesehenes Federelement (8) mit einer maximalen Höhe (h"), respektive einem maximalen Durchmesser (D) von 0,9 mm, mit vorgebbarer radialer Spannkraft (F) an eine den Kolben (1) umgebende Gegenlauffläche (9) andrückbar sind;
**dadurch gekennzeichnet, dass**
mindestens einer der einander zugewandten Flankenbereiche (6', 7') mindestens einer der Lamellen (6, 7) profiliert ausgebildet ist, wobei das Profil durch einen balligen Flankenbereich (6', 7') gebildet ist.

2. Ölabstreifring nach Anspruch 1, **dadurch gekennzeichnet, dass** eine jede Lamelle (6, 7) eine maximale Höhe (h') von 0,46 mm aufweist.

3. Ölabstreifring nach einem der Ansprüche 1 und 2, **dadurch gekennzeichnet, dass** die Wandstärke (b) der Lamellen (6, 7) zwischen 2 und 4 mm beträgt.

4. Ölabstreifring nach Anspruch 1, **dadurch gekennzeichnet, dass** das Profil durch mindestens eine umlaufende Ausnehmung (10, 11) vorgebbarer radialer Tiefe und axialer Höhe gebildet ist.

5. Ölabstreifring nach einem der Ansprüche 1 bis 4, **dadurch gekennzeichnet, dass** die einander zugewandten Flankenbereiche (6', 7') beider Lamellen mit gegensinnig ausgebildeten Profilen (10, 11) ausgebildet sind.

6. Ölabstreifring nach einem der Ansprüche 1 bis 5, **dadurch gekennzeichnet, dass** die Lamellen (6, 7) zumindest laufflächenseitig zumindest partiell gerundet ausgebildet sind.

7. Ölabstreifring nach einem der Ansprüche 1 bis 6, **dadurch gekennzeichnet, dass** die Lauffläche (12, 13) der Lamellen (6, 7) mit einer verschleissfesten Beschichtung (14, 15) versehen ist.

8. Ölabstreifring nach Anspruch 7, **dadurch gekennzeichnet, dass** die Lauffläche (12, 13) der Lamellen (6, 7) verchromt, nitriert oder mit einer aufgedampften Schicht (PVD, CVD) versehen ist.

9. Ölabstreifring nach einem der Ansprüche 1 bis 8, **dadurch gekennzeichnet, dass** die Lamelle (6, 7) vollständig nitriert ist.

10. Ölabstreifring nach Anspruch 9, **dadurch gekennzeichnet, dass** das Federelement (8) nitriert ist.

11. Ölabstreifring nach einem der Ansprüche 1 bis 10, **dadurch gekennzeichnet, dass** das Federelement (8) im eingebauten Zustand die Lamellen (6, 7) mit einer radialen Spannkraft von 3 bis 7 N an die Gegenfläche (9) andrückt.

## Claims

1. An oil control ring for a piston (1) of an internal combustion engine, wherein the piston (1) is provided with a circumferential groove (4) to accommodate the oil control ring (5), the axial height (h) of which groove is approximately 1 mm, consisting of two discs (6, 7) having a total height of < 1 mm, which are arranged one above the other with a defined axial clearance inside the groove (4) when in the installed state and can be pressed against a counter running surface (9) surrounding the piston (1) with a predefinable radial clamping force (F) by means of a spring element (8), which is provided on the groove side and has a maximum height (h") or a maximum diameter (D) of 0.9 mm;
**characterised in that**
at least one of the flank regions (6', 7') that face each other of at least one of the discs (6, 7) is formed in a profiled manner, wherein the profile is formed by a crowned flank region (6', 7').

2. The oil control ring according to claim 1, **characterised in that** each disc (6, 7) has a maximum height (h') of 0.46 mm.

3. The oil control ring according to one of claims 1 and 2, **characterised in that** the wall thickness (b) of the discs (6, 7) is between 2 and 4 mm.

4. The oil control ring according to claim 1, **characterised in that** the profile is formed by at least one circumferential recess (10, 11) of predefinable radial depth and axial height.

5. The oil control ring according to any one of claims 1 to 4, **characterised in that** the flank regions (6', 7') that face each other of the two discs are formed with profiles (10, 11) formed in opposite directions to each other.

6. The oil control ring according to any one of claims 1 to 5, **characterised in that** the discs (6, 7) are at least partially rounded, at least on the running surface side.

7. The oil control ring according to any one of claims 1 to 6, **characterised in that** the running surface (12, 13) of the discs (6, 7) is provided with a wear-resistant coating (14, 15).

8. The oil control ring according to claim 7, **characterised in that** the running surface (12, 13) of the discs (6, 7) is chrome-plated, nitrided or provided with a vapour-deposited layer (PVD, CVD).

9. The oil control ring according to any one of claims 1 to 8, **characterised in that** the disc (6, 7) is completely nitrided.

10. The oil control ring according to claim 9, **characterised in that** the spring element (8) is nitrided.

11. The oil control ring according to any one of claims 1 to 10, **characterised in that** when in the installed state, the spring element (8) presses the discs (6, 7) against the counter surface (9) with a radial clamping force of 3 to 7 N.

## Revendications

1. Segment racleur de piston pour un piston (1) d'un moteur à combustion interne, dans lequel le piston (1) est pourvu afin de recevoir le segment racleur de piston (5) d'une rainure circonférentielle (4), dont la hauteur axiale (h) s'élève à approximativement 1 mm, constitué de deux lamelles (6, 7) avec une hauteur totale < 1 mm, qui en l'état monté sont disposées l'une sur l'autre avec un jeu axiale défini à l'intérieur de la rainure (4)et peuvent être pressées par un élément de ressort (8) prévu du côté rainure avec une hauteur maximale (h"), respectivement un diamètre (D) maximale de 0,9 mm, avec une force de serrage radial (F) prescrite sur une surface de roulement opposée (9) entourant le piston (1),
**caractérisé en ce qu'**
au moins une des zones de flanc (6', 7') tournées l'une vers l'autre d'au moins une des lamelles (6, 7) est conçue de manière profilée, dans lequel le profilé est formé par une zone de flanc bombée (6', 7').

2. Segment racleur de piston selon la revendication 1, **caractérisé en ce que** chacun des lamelles (6, 7) présente une hauteur maximale (h') de 0,46 mm.

3. Segment racleur de piston selon une des revendications 1 et 2, **caractérisé en ce que** l'épaisseur de paroi (b) des lamelles (6, 7) est comprise entre 2 et 4 mm.

4. Segment racleur de piston selon la revendication 1, **caractérisé en ce que** le profilé est formé par au moins un évidement circonférentiel (10, 11) d'une profondeur radiale et d'une hauteur axiale prescrite.

5. Segment racleur de piston selon une des revendications 1 à 4, **caractérisé en ce que** les zones de flanc (6', 7') tournées l'une vers l'autre des deux lamelles sont conçues avec des profilés réalisés en sens opposé (10, 11).

6. Segment racleur de piston selon une des revendications 1 à 5, **caractérisé en ce que** les lamelles (6, 7) sont conçues au moins du côté de la surface de roulement d'une manière au moins partiellement arrondie.

7. Segment racleur de piston selon une des revendications 1 à 6, **caractérisé en ce que** la surface de roulement (12, 13) des lamelles (6, 7) est pourvue d'un revêtement résistant à l'usure (14, 15).

8. Segment racleur de piston selon la revendication 7, **caractérisé en ce que** la surface de roulement (12, 13) des lamelles (6, 7) est chromée, nitrurée ou est pourvue d'une couche appliquée par dépôt vapeur (PVD, CVD).

9. Segment racleur de piston selon une des revendications 1 à 8, **caractérisé en ce que** les lamelles (6, 7) sont complètement niturées.

10. Segment racleur de piston selon la revendication 9, **caractérisé en ce que** l'élément de ressort (8) est nitruré.

11. Segment racleur de piston selon une des revendications 1 à 10, **caractérisé en ce que** l'élément de ressort (8) en l'état monté pression les lamelles (6, 7) avec une force de serrage radiale de 3 à 7 N sur la surface opposée (9).
